(19) Europäisches Patentamt
European Patent Office
Office européen des brevets

(11) **EP 2 790 906 B1**

(12) **FASCICULE DE BREVET EUROPEEN**

(45) Date de publication et mention de la délivrance du brevet:
**03.05.2017 Bulletin 2017/18**

(21) Numéro de dépôt: **12809213.7**

(22) Date de dépôt: **14.12.2012**

(51) Int Cl.:
**B29D 30/06** ^(2006.01)

(86) Numéro de dépôt international:
**PCT/EP2012/075516**

(87) Numéro de publication internationale:
**WO 2013/087828 (20.06.2013 Gazette 2013/25)**

(54) **METHODE DE FABRICATION D'UNE BANDE DE ROULEMENT POUR PNEUMATIQUE**

VERFAHREN ZUR HERSTELLUNG EINER REIFENLAUFFLÄCHE

METHOD FOR THE PRODUCTION OF A TYRE TREAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2011 FR 1161796**

(43) Date de publication de la demande:
**22.10.2014 Bulletin 2014/43**

(73) Titulaires:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventeurs:
• **DUVERNIER, Marc**
**F-63040 Clermont-Ferrand cedex 9 (FR)**

• **ABAD, Vincent**
**F-63040 Clermont-Ferrand cedex 9 (FR)**
• **PERRIN, Frédéric**
**F-63040 Clermont-Ferrand cedex 9 (FR)**
• **CUSTODERO, Emmanuel**
**F-63040 Clermont-Ferrand cedex 9 (FR)**

(74) Mandataire: **Demaure, Pierre-Yves**
**Manufacture Française**
**des Pneumatiques Michelin**
**23, place des Carmes - Déchaux**
**DGD/PI - F35 - Ladoux**
**63040 Clermont-Ferrand Cedex 9 (FR)**

(56) Documents cités:
**EP-A1- 0 510 550    EP-A2- 0 320 215**
**GB-A- 1 124 915    US-A- 5 614 041**
**US-A- 6 044 882    US-A1- 2007 039 672**

EP 2 790 906 B1

**Description**

DOMAINE DE L'INVENTION

La présente invention concerne le domaine de la fabrication des pneumatiques. Plus particulièrement, l'invention se rapporte à la fabrication de pneumatiques dont la bande de roulement comprend une pluralité d'éléments en relief comportant sur au moins une de leur face latérale une couche de recouvrement.

ETAT DE LA TECHNIQUE

De telles méthodes de fabrication de bandes de roulement de pneumatiques sont connues de l'art antérieur, notamment dans les documents EP320215, GB1124915, US5614041, EP510550.

Il est également connu de concevoir des pneumatiques dont la bande de roulement comprend différents mélanges de caoutchouc. Le document WO 03089257 divulgue de telles bandes de roulement. Plus particulièrement, le document WO 03089257 divulgue une bande de roulement comportant des éléments en reliefs. Chaque élément en relief comprend une face de contact destinée à entrer en contact avec un sol au cours du roulage du pneumatique et des faces latérales reliées à la face de contact. Tout ou partie des faces latérales de ces éléments en relief sont revêtues d'une couche de recouvrement. Le matériau constituant cette couche de recouvrement est différent du mélange de caoutchouc constituant la bande de roulement. Ce matériau présente notamment une adhérence sur sol mouillé bien supérieure à l'adhérence sur sol mouillé du mélange de caoutchouc. Ceci permet d'améliorer très sensiblement les performances en régime de virage sur sol mouillé.

Un mode de fabrication de cette bande de roulement est notamment divulgué dans le document WO 2006069912. Selon ce mode de fabrication, dans une première étape, il est prévu d'injecter sous forme d'un ou plusieurs inserts le matériau destiné à constituer une couche de recouvrement dans l'ébauche crue à l'aide d'une buse d'injection. Le ou les inserts sont ensuite mis en forme, dans une seconde étape, par des cordons d'un moule de vulcanisation pour recouvrir des faces latérales moulées par les cordons.

Ce mode de fabrication connaît quelques limites. En effet au cours de sa mise en forme, l'insert subit un effort de cisaillement important de la part du cordon en vue de transformer cet insert en une couche d'épaisseur réduite. Cet effort de cisaillement peut générer des fissures au sein de l'insert ce qui rend plus difficile la maîtrise des mouvements du matériau composant cet insert. La forme et l'épaisseur de la couche de recouvrement ainsi formée peuvent alors être aléatoires. Les avantages apportés par la couche sur le fonctionnement du pneumatique sont alors réduits.

De plus dans ce mode de fabrication, il est nécessaire de faire correspondre les inserts avec les cordons. Ceci rend alors plus complexe la fabrication de la bande de roulement.

Il existe alors un besoin pour améliorer la mise en place d'une couche de recouvrement sur une face latérale d'un élément en relief appartenant à une bande de roulement d'un pneumatique.

DEFINITIONS

Par « pneumatique », on entend tous les types de bandages élastiques soumis à une pression interne ou non.

Par « ébauche crue » d'un pneumatique, on entend une superposition d'une pluralité de produits semi-finis caoutchouteux présents sous forme de bandelettes ou de feuilles, renforcées ou non. L'ébauche crue est destinée à être vulcanisée dans un moule pour obtenir le pneumatique.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de roulement », on entend la surface formée par les points de la bande de roulement du pneumatique qui entrent en contact avec la chaussée lorsque le pneumatique roule.

Par « élément en relief », on entend des éléments de la bande de roulement délimités par des rainures et/ou des incisions. Parmi les éléments en relief, on distingue des nervures, faisant le tour complet du pneumatique, et des blocs ne faisant par le tour complet du pneumatique.

Par « moule », on entend un ensemble d'éléments moulants séparés qui, par rapprochement relatif, permettent de délimiter un espace de moulage toroïdal.

Par « surface de moulage » d'un moule, on entend la surface du moule destinée à mouler la surface de la bande de roulement du pneumatique.

Par « lame » d'un moule, on entend une protubérance faisant saillie à partir de la surface de moulage. Parmi les lames, on distingue des lamelles comportant une largeur inférieure à 2 mm et des cordons comportant une largeur supérieure ou égale à 2 mm. Les lamelles sont destinées à mouler des incisions dans la bande de roulement du pneumatique, c'est-à-dire des découpures qui se ferment au moins en partie dans l'aire de contact du pneumatique avec le sol. Les cordons sont destinés à mouler des rainures dans la bande de roulement, c'est-à-dire des découpures qui ne ferment pas dans l'aire de contact du pneumatique avec le sol.

Par « étape de moulage » d'une face latérale d'un élément moulant, on entend une opération qui débute au moment où une lame d'un moule vient en contact avec une couche de recouvrement couvrant une surface externe d'une ébauche crue. Au cours de cette étape de moulage, la lame vient former une découpure, cette découpure délimitant alors une face latérale d'un élément moulant. L'étape de moulage se termine au moment où la lame quitte la découpure qu'elle vient de mouler.

RESUME DE L'INVENTION

L'invention concerne une méthode comme définie dans la revendication 1, pour la fabrication d'une bande de roulement d'un pneumatique, cette bande de roulement comprenant une pluralité d'éléments en relief formés dans un matériau caoutchoutique déterminé. Chaque élément en relief comporte une face de contact destinée à entrer en contact avec un sol au cours d'un roulage du pneumatique et des faces latérales reliées à cette face de contact. Cette méthode de fabrication comporte une étape de préparation d'une ébauche crue du pneumatique, une étape de mise en place d'une couche de recouvrement sur tout ou partie d'une surface externe de l'ébauche crue, une étape de mise en place de l'ébauche crue dans un moule, ce moule comportant une lame, une étape de moulage par cette lame d'une face latérale d'un élément en relief et une étape de vulcanisation de l'ébauche crue pour l'obtention du pneumatique. La méthode de fabrication comporte également une étape de découpe de la couche de recouvrement par des moyens de découpe appartenant au moule et au cours du moulage de la face latérale de l'élément en relief par la lame, une étape d'entraînement par cette lame d'une partie découpée de la couche de recouvrement dans l'ébauche crue de sorte à ce que la face latérale de l'élément en relief soit recouverte partiellement ou en totalité par cette partie découpée.

Des formes préférentielles de l'invention sont définies dans les revendications dépendantes.

Par la méthode de fabrication de l'invention, on vient positionner une couche de recouvrement sur une face latérale d'un élément en relief d'une manière simple et pratique.

Dans le cas particulier où la lame est un cordon présentant une largeur supérieure ou égale à 2 mm, l'aire de contact de ce cordon avec la couche de recouvrement, au moment du contact entre le cordon et la couche, est suffisamment importante pour permettre l'entraînement de cette couche de recouvrement dans la profondeur de l'ébauche crue tout en limitant des déformations, notamment des déformations dans son épaisseur. Dès lors, la couche de recouvrement vient se positionner globalement uniformément contre les parois de la rainure formée par le cordon au fur et à mesure du moulage de cette rainure.

On notera également que la couche de recouvrement est ici découpée par des éléments du moule qui vont ainsi adapter directement cette découpe aux caractéristiques de la sculpture de la bande de roulement recherchée. On facilite ainsi la fabrication d'une bande de roulement comportant des éléments en relief présentant sur tout ou partie de leur paroi latérale une couche de recouvrement.

En variante, la découpe de la couche de recouvrement par les moyens de découpe du moule est réalisée avant le moulage de la face latérale.

On s'assure ainsi qu'au moment où la lame du moule va venir en contact avec la couche de recouvrement pour l'entraîner dans l'ébauche crue, cette couche aura été pleinement découpée. On évite ainsi tout risque de déchirement de la couche de recouvrement du fait de la pression exercée par la lame sur cette couche.

Dans une autre variante, la découpe de la couche de recouvrement par les moyens de découpe du moule est réalisée au cours du moulage de la face latérale.

Dans une autre variante, on règle la position des moyens de découpe par rapport à la lame, préalablement à l'étape de découpe de la couche de recouvrement.

Il est ainsi possible de régler facilement la quantité de matériau de la couche de recouvrement présent dans la découpure moulée par la lame. En réglant la position des moyens de découpe de manière adéquate, on peut en outre limiter la présence inesthétique d'un surplus de matériau de couche de recouvrement, hors de la découpure.

En variante, les moyens de découpe étant amovibles, on monte dans le moule des moyens de découpe adaptés aux caractéristiques de la couche de recouvrement.

On adapte ainsi le moule aux caractéristiques de cette couche.

En variante, la couche de recouvrement est enroulée sur la surface externe de l'ébauche crue, dans la largeur de cette ébauche crue.

On facilite ainsi la mise en place de cette couche de recouvrement sur l'ébauche crue.

En variante, la couche de recouvrement comprend un matériau élastomère et un assemblage de fibres tissées ou intissées, ces fibres étant imprégnées avec ce matériau élastomère.

Par l'utilisation de fibres dans la couche de recouvrement, on renforce la tenue mécanique de cette couche ce qui facilite sa découpe. En outre, la présence d'un assemblage de fibres dans la couche de recouvrement permet, en raison de la rigidité intrinsèque de ces fibres, de limiter l'extensibilité de la couche de recouvrement lors de sa découpe, ce qui facilite sa mise en place dans l'ébauche crue. Enfin, l'imprégnation des fibres par le matériau élastomère donne une excellente cohésion à l'ensemble. La couche de recouvrement se comporte ainsi comme une unité lors de son découpage et de sa mise en place dans l'ébauche crue. L'imprégnation des fibres peut être est réalisée par calandrage à chaud, moulage sous presse ou injection sous pression.

En variante, le matériau élastomère est prévulcanisé pendant l'étape d'imprégnation des fibres.

Par cette étape de prévulcanisation, on améliore les capacités de glissement de la couche de recouvrement sur la surface de l'ébauche crue.

BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :

- la **figure 1** représente schématiquement un élément moulant pour la mise en oeuvre d'une méthode de fabrication conforme à l'invention ;

- la **figure 2a** illustre une étape de découpe de la couche de matériau particulier selon la méthode de fabrication conforme à l'invention ;

- la **figure 2b** illustre une étape d'entraînement par une lame de l'élément moulant d'une partie de la couche de recouvrement dans une ébauche crue ;

- la **figure 2c** illustre une étape de moulage intermédiaire dans laquelle les moyens de découpe et la lame sont entièrement positionnés dans l'ébauche crue ;

- la **figure 2d** représente schématiquement une partie de la bande de roulement d'un pneumatique suite aux étapes des **figures 2a-2c** ;

- la **figure 3** représente une vue de dessus d'un échantillon de la bande de roulement obtenue par la méthode de fabrication selon l'invention ;

- la **figure 4** représente une vue de côté de l'échantillon de la **figure 3**.

Dans la description qui va suivre, des éléments sensiblement identiques ou similaires seront désignés par des références identiques.

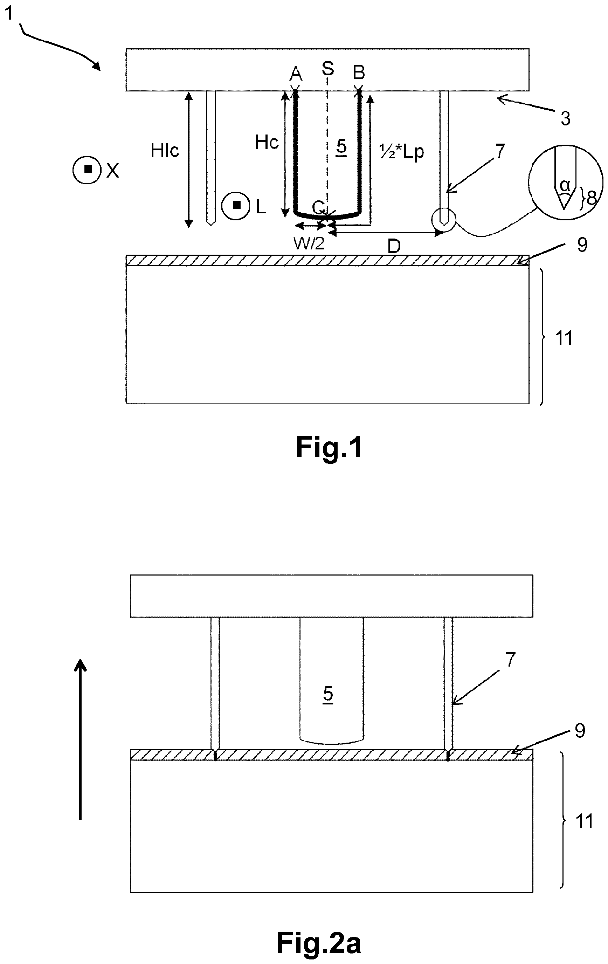

La **figure 1** représente un élément moulant 1 pour la mise en oeuvre d'une méthode de fabrication conforme à l'invention

Plus particulièrement, l'élément moulant 1 comprend une surface de moulage 3 destinée à mouler une partie de la surface de roulement d'un pneumatique. L'élément moulant 1 comporte également des lames 5 dont une seule est ici représentée pour faciliter la compréhension de l'invention. La lame est ici un cordon 5 destiné à mouler une rainure dans la bande de roulement du pneumatique. Par « rainure » dans une bande de roulement, on entend une découpure dans cette bande dont la largeur, c'est-à-dire la distance séparant deux parois latérales de cette rainure, est supérieure à 2 mm. Le cordon 5 s'étend en hauteur en faisant saillie à partir de cette surface de moulage 3. Le cordon 5 s'étend également en longueur selon une direction d'extension X. Dans le moule, cette direction peut être une direction circonférentielle qui suit la circonférence du moule. En variante, la direction d'extension est une direction transversale perpendiculaire à la direction circonférentielle du moule. Dans une autre variante, cette direction d'extension est une direction oblique formant un angle non nul avec la direction circonférentielle et la direction transversale du moule.

La **figure 1** représente l'élément moulant 1 vu dans un plan de coupe perpendiculaire à la direction d'extension X. Dans ce plan de coupe, le cordon 5 présente une section ayant une symétrie par rapport à un axe de symétrie S. L'axe de symétrie S s'étend ici dans la hauteur $H_c$ du cordon 5 et il sépare ce cordon 5 en deux demi-cordons de largeur $W/2$.

La section du cordon a ici une forme rectangulaire. Par « forme rectangulaire », on entend que la face supérieure du cordon est perpendiculaire aux faces latérales de ce cordon, c'est-à-dire que les faces latérales du cordon font avec la face supérieure de ce cordon un angle compris entre 85° et 95°.

L'invention englobe également le cas où les zones de raccord entre les faces latérales du cordon et la face supérieure de ce cordon sont arrondies ainsi que le cas où les zones de raccord entre les faces latérales du cordon et l'embase sont également arrondies.

Dans des variantes de réalisation complémentaires, la section du cordon peut prendre une autre forme qu'une forme rectangulaire, telle qu'une forme carrée, une forme triangulaire, etc...

On notera également que la section du cordon 5 présente, entre deux points d'intersection A et B du cordon 5 avec la surface de moulage 3, un profil représenté en traits gras sur la **figure 1**. Ce profil a une longueur de profil Lp telle que Lp=2*(Hc+W/2), c'est-à-dire que la longueur de profil Lp correspond à deux fois la hauteur Hc du cordon 5 auquel on ajoute la largeur W de ce cordon.

Dans l'exemple de la **figure 1**, les points d'intersection A et B sont facilement déterminables, les parois latérales du cordon 5 étant perpendiculaires à la surface de moulage 3. En variante, dans le cas où les parois latérales du cordon sont raccordées à la surface de moulage 3 par deux zones de raccordement arrondies formant deux arcs de cercle, les points d'intersection A et B correspondent respectivement à l'intersection des arcs de cercle avec des droites passant par les centres des arcs de cercle et séparant ces arcs en deux ½ arcs identiques.

L'élément moulant 1 de la **figure 1** présente également deux moyens de découpe 7 disposées de part et d'autre du cordon 5. Ces moyens de découpe s'étendent dans leur longueur selon une direction parallèle à la direction d'extension X du cordon 5. Par « direction parallèle », on entend que la direction d'extension des moyens de découpe forme un angle compris entre -5° et +5° avec la direction d'extension X du cordon. La hauteur Hlc des moyens de découpe est au moins égale à la hauteur Hc du cordon.

Chaque moyen de découpe comporte une extrémité 8 apte à découper une couche 9 de recouvrement recouvrant une ébauche crue 11 d'un pneumatique. Plus particulièrement, chaque moyen de découpe comporte à son extrémité une arête de découpe (représentée par une pointe sur la **figure 1**). Cette arête de découpe présente dans le plan de la **figure 1**, un angle $\alpha$ inférieur ou égal à 60° (voir le médaillon associé à la **figure 1** constituant un agrandissement de l'extrémité d'un des deux moyens de découpe 7). Dans un mode de réalisation préférentiel, l'angle $\alpha$ est inférieur ou égal à 35°.

On notera que cette arête de découpe peut avoir été préalablement durcie pour améliorer sa tenue mécanique dans le temps. Par exemple, l'arête de découpe peut avoir été durcie lors d'un traitement thermique particulier. En variante, il est possible de prévoir que le matériau constituant l'arête de découpe soit plus résistant que le reste de l'élément moulant.

On notera également que les moyens de découpe 7 sont disposés dans l'élément moulant 1 de sorte que la distance D entre chaque extrémité des moyens de découpe et l'axe de symétrie S de la section du cordon 5 est inférieure ou égale à la moitié de la longueur Lp du profil de la section, telle que D=Hc+W/2. Dit autrement, l'axe de symétrie S intersecte le profil du cordon 5 en un point C pour définir deux sous-profils. Un premier sous-profil correspond au segment A-C et un second sous-profil correspond au segment B-C. Pour chaque moyen de coupe, la distance entre l'arête de ce moyen de coupe et l'axe de symétrie S est inférieure ou égale à la longueur du sous-profil adjacent à ce moyen de coupe, c'est-à-dire le sous-profil appartenant au demi-cordon le plus proche du moyen de coupe. Dans l'exemple de la **figure 1**, le sous-profil le plus proche du moyen de coupe 7 est le sous-profil correspondant au segment B-C.

Il est possible également de régler la distance D des moyens de découpe par rapport à la lame. De cette manière, on donne à la partie découpée la longueur qui convient de sorte que la partie de la couche de recouvrement découpée et enfoncée dans la bande de roulement affleure, par exemple, la surface de cette bande de roulement. Cette distance D peut être réglée par des essais successifs. Pour cela, il est par exemple possible de coller et de décoller à souhait ces moyens de découpe dans le moule.

En outre dans une variante de réalisation, les moyens de découpe peuvent être montés amovibles dans l'élément moulant ce qui permet d'utiliser des moyens de découpe adaptés aux caractéristiques de la couche de recouvrement à découper.

Les **figures 2a à 2c** illustrent plus en détails les différentes étapes pour la mise oeuvre de la méthode de fabrication.

La **figure 2a** divulgue une étape de découpe de la couche de recouvrement. Dans cette étape, l'élément moulant 1 et l'ébauche crue 9 se rapprochent. Ce rapprochement, est par exemple, initié par une membrane (non représentée) dans le moule. Cette membrane sous l'action d'une quantité de vapeur mise sous pression se gonfle et vient repousser l'ébauche crue vers l'élément moulant 1. Plus particulièrement, la **figure 2a** présente l'instant où les moyens de découpe 7 viennent découper la couche de recouvrement 9 en une pluralité de parties présentant ici une même épaisseur. Cette étape de découpe est facilitée par l'action des arêtes coupantes des moyens de découpe.

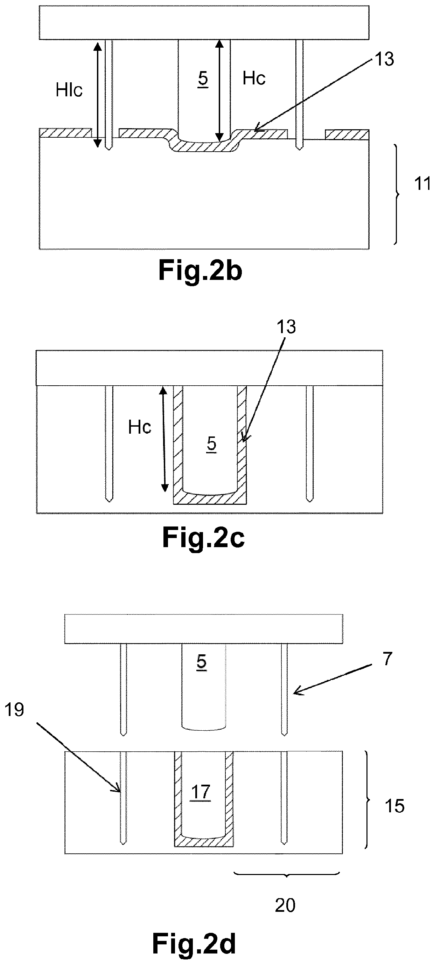

La **figure 2b** illustre une étape d'entraînement par la lame d'une partie de la couche de recouvrement dans l'ébauche crue. Dans cette étape, le cordon 5 vient enfoncer l'ébauche crue 11. Plus particulièrement, dans cette étape le cordon 5 vient en contact contre une partie 13 découpée dans la couche de recouvrement. Le cordon 5 vient ainsi entraîner cette partie 13 dans la profondeur de l'ébauche crue 9.

On notera ici que la hauteur Hlc des moyens de découpe 7 est supérieure à la hauteur Hc du cordon 5. Ainsi l'étape de découpe de la **figure 2a** est antérieure à l'étape d'enfoncement de l'ébauche crue 11 par le cordon 5. En variante, il est possible de prévoir que la hauteur Hlc des moyens de découpe 7 soit identique à la hauteur Hc du cordon 5. Dans ce cas l'étape de la **figure 2a** et l'étape de la **figure 2b** ont lieu au même instant.

La **figure 2c** illustre une étape intermédiaire de moulage dans laquelle le cordon 5 vient enfoncer l'ébauche crue sur toute sa hauteur Hc. L'ensemble de la partie 13 de la couche de recouvrement se retrouve alors dans l'ébauche crue. Une fois cette étape effectuée, il est alors possible de réaliser la vulcanisation de l'ébauche crue, c'est-à-dire le passage de l'état plastique à l'état élastique du matériau caoutchoutique constituant l'ébauche crue. Cette étape de vulcanisation peut modifier également la structure interne de la couche de recouvrement.

La **figure 2d** représente le résultat des différentes étapes de moulage et de vulcanisation de l'ébauche crue illustrée aux **figures 2a** à **2c**. La partie de la bande de roulement 15 ainsi obtenue comprend une rainure 17 obtenue par un moulage de caoutchouc autour du cordon 5 et deux incisions 19 obtenues par un moulage de caoutchouc autour des deux moyens de découpe 7. On notera ici que l'ensemble des parois de la rainure, c'est-à-dire les parois latérales et la paroi de fond encadrée par les parois latérales, sont recouvertes par la partie découpée 13 de la couche de recouvrement.

En fonction du type du matériau constituant la couche de recouvrement, on peut donner au bloc 20 délimité en partie par la rainure 17 des propriétés spécifiques. Ainsi, dans le cas où on cherche à améliorer les performances d'adhérence de la bande de roulement sur neige, on peut utiliser un matériau de recouvrement présentant un module dynamique de cisaillement G* soumis à une contrainte maximale alternée de 0,7 MPa, à une fréquence de 10 Hz et à une température de -10°C supérieur à 60 MPa, de préférence supérieur à 200 MPa.

Dans le présent document, les termes « module élastique G' » et « module visqueux G" » désignent des propriétés dynamiques bien connues de l'homme du métier. Ces propriétés sont mesurées sur un viscoanalyseur de type Metravib VA4000 sur des éprouvettes moulées à partir de compositions crues. Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre de l'éprouvette est de 10 mm (elle a donc une section circulaire de 78.5 mm$^2$), l'épaisseur de chacune des portions de composition caoutchouteuse est de 2 mm, ce qui donne un ratio « diamètre sur épaisseur » de 5 (contrairement à la norme ISO 2856, mentionnée dans la norme ASTM, paragraphe X2.4, qui préconise une valeur d/L de 2). On enregistre la réponse d'un échantillon de composition caoutchouteuse vulcanisée soumis à une sollicitation sinusoïdale en cisaillement simple alterné, à la fréquence de 10 Hz. L'éprouvette est sollicitée en cisaillement sinusoïdal à 10 Hz, à contrainte imposée (0.7 MPa), symétriquement autour de sa position d'équilibre. La mesure est réalisée au cours d'une rampe de température croissante de 1,5°C par minute, depuis une température Tmin inférieure à la température de transition vitreuse (Tg) du matériau, jusqu'à une température Tmax qui peut correspondre au plateau caoutchoutique du matériau. Avant de commencer le balayage, on stabilise l'échantillon à la température Tmin pendant 20 min pour avoir une température homogène au sein de l'échantillon. Le résultat exploité est le module élastique de cisaillement dynamique (G') et le module visqueux de cisaillement (G") aux températures choisies (en l'occurrence, 0°, 5° et 20°C). Le « module complexe » G* se définit comme la valeur absolue de la somme complexe des modules élastique G' et visqueux G'' : $G^{*} = \sqrt{(G'^{2}+G''^{2})}$ .

Dans une variante de réalisation, le matériau élastomère de la couche de recouvrement comprend une composition à base d'au moins un élastomère diénique très fortement chargé en souffre, tel que de l'ébonite.

Dans une autre variante de réalisation, la couche de recouvrement comprend un assemblage de fibres, par exemple un assemblage tridimensionnel de fibres formant un feutre. Les fibres de ce feutre peuvent être choisies dans le groupe des fibres textiles, des fibres minérales et de leur mélange. On notera également que les fibres de ce feutre peuvent être choisies parmi des fibres textiles d'origine naturelle, par exemple, dans le groupe des fibres de soie, de coton, de bambou, de cellulose, de laine et de leurs mélanges.

Dans une autre variante de réalisation, le matériau élastomère de la couche de recouvrement comprend une composition à base d'au moins un polymère thermoplastique, tel que du polyéthylène téréphtalate (PET). Un tel polymère peut présenter un module de Young supérieur à 1 GPa.

On notera que la couche de recouvrement peut être monocouche. En variante, la couche de recouvrement peut comprendre plusieurs couches de compositions différentes. Par exemple, le matériau constituant la partie inférieure de la couche de recouvrement en contact avec l'ébauche crue peut être sélectionné de sorte à améliorer le glissement de la couche de recouvrement sur l'ébauche crue lorsque le cordon entraîne cette couche de recouvrement dans la profondeur de l'ébauche. Le matériau constituant la couche inférieure peut être, par exemple, du coton ou du caoutchouc pré-vulcanisé. De la même manière, le matériau constituant la partie supérieure de la couche de recouvrement est sélectionné pour les propriétés que l'on souhaite donner à la bande de roulement, par exemple, une meilleure adhérence sur un sol enneigé.

Préalablement à l'étape de moulage, la méthode de fabrication comprend une étape de préparation de l'ébauche crue du pneumatique, une étape de mise en place de la couche de recouvrement sur tout ou partie de la surface externe de l'ébauche crue et une étape de mise en place de l'ébauche crue ainsi recouverte dans un moule comprenant l'élément moulant 1.

L'étape de préparation de l'ébauche crue consiste à disposer des bandes de gomme, dans lesquelles sont noyées des fils d'armature, sur un support sensiblement de révolution. Habituellement, les fils d'armatures sont sensiblement parallèles à l'axe de révolution du support d'ébauche.

Une fois l'ébauche crue préparée, il est possible de recouvrir la surface externe de cette ébauche crue avec la couche de recouvrement. Cette couche de recouvrement peut recouvrir entièrement ou en partie cette surface externe. On notera que la couche de recouvrement est formée à partir d'une ou plusieurs bandes enroulées sur la surface externe de l'ébauche crue, dans la largeur de cette ébauche crue. En variante, cette couche est formée à partir d'une ou plusieurs bandes enroulées dans la circonférence de l'ébauche crue.

L'ébauche crue recouverte par la couche de recouvrement est ensuite placée dans un moule.

Plusieurs essais de réalisation de pneumatiques avec des bandes de roulement comportant des couches de recouvrement dans les découpures ont été réalisés.

Le tableau 1 décrit les différents essais réalisés.

Le tableau 2 donne les formulations des matériaux élastomères utilisés, et le tableau 3 présente les résultats de tests de frottement réalisés.

**Tableau 1**

|  | A1 | A2 | A3 | A4 | A5 |
|---|---|---|---|---|---|
| Assemblage de fibres | Tissu de coton (1) | Tissu de coton (1) | Feutre de viscose (2) | Feutre de viscose (2) | Feutre de viscose (2) |
| Matériau élastomère | ME1 | ME2 | ME2 | ME2 | ME2 |
| Empilage | bande de coton 1 couche de matériau élastomère | bande de coton 1 couche de matériau élastomère | 1 mm de feutrine 2 couches de matériau élastomère | 1 mm de feutrine 2 couches de matériau élastomère | 1 mm de feutrine 1 couche de matériau élastomère |
| Conditions d'imprégnation | T = 160°C P=16 bars T=9 minutes | T = 160°C P=16 bars T=9 minutes | T = 160°C P=16 bars T=11 minutes | T = 160°C P=16 bars T=20 minutes | T = 160°C P=16 bars T=9 minutes |
| (1) Tissu de coton (Coco coupon, Cournon-d'Auvergne)<br>(2) Feutre de viscose, 100% viscose, 275 g/m, épaisseur : 1 mm (www.feutrine-express.fr). | | | | | |

**Tableau 2**

|  | ME1 (pce) | ME2 (pce) |
|---|---|---|
| NR (1) | 40,0 |  |
| SBR (2) | 60,0 |  |
| SBR (3) |  | 100,0 |
| Noir de carbone (4) | 37,5 | 10,0 |
| Plastifiant liquide (5) | 2,0 |  |
| Plastifiant liquide (6 |  | 10,0 |
| Résine plastifiante (7) |  | 17,1 |
| ZnO (8) | 10 | 1,5 |
| Acide stéarique (9) | 1,0 | 3,0 |
| 6PPD (10) | 2,0 | 2,2 |
| Soufre | 27,0 | 1,4 |

(suite)

|  | ME1 (pce) | ME2 (pce) |
|---|---|---|
| CBS (11) | 13,5 | 1,6 |

(1) Caoutchouc naturel (RSS#3) ;

(2) SBR solution (taux exprimés en SBR sec : 23% de styrène, 15 % des motifs polybutadiène en 1-2 et 70% des motifs polybutadiène en 1-4 trans (Tg = - 52°C) ;

(3) SBR solution (taux exprimés en SBR sec : 44% de styrène, 41 % des motifs polybutadiène en 1-2 (Tg = - 12°C) ;

(4) Noir de carbone N234 ;

(5) Huile MES ("Catenex SNR" de Shell) (6) Huile TDAE « Vivatec 500 » de la société Hansen & Rosenthal (7) résine hydrocarbonée type C5 (« Wingtack 86 » de la société Crayvalley) ;

(8) oxyde de zinc (grade industriel - société Umicore) ;

(9) stéarine (« Pristerene » de la société Uniquema) ;

(10) N-1,3-diméthylbutyl-N-phénylparaphénylènediamine (« Santoflex 6-PPD » de la société Flexsys) ; DPG = Diphénylguanidine (« Perkacit DPG » de la société Flexsys) ;

(11) N-cyclohexyl-2-benzothiazyl-sulfénamide (« Santocure CBS » de la société Flexsys).

Le tableau 1 décrit les différents essais réalisés.

Le premier essai A1 a été réalisé avec une couche de recouvrement constituée d'un tissu de fibres de coton comme assemblage de fibres et d'une couche d'un mélange diénique ME1 fortement chargé en soufre comme matériau élastomère d'imprégnation.

L'assemblage a été placé dans une presse à plateaux sous une pression de 16 bars, à une température de 160°C pendant une durée de 9 minutes pour réaliser l'imprégnation du tissu par le mélange. L'épaisseur finale de la couche de recouvrement a été de l'ordre de 0,6 mm.

Après l'imprégnation, des bandes de couche de recouvrement ont été placées à la surface d'une ébauche de bande de roulement d'un bandage pneumatique. Il est à noter qu'une partie des fils de coton (les fils de chaîne ou de trame) a été orientés perpendiculairement à la direction du déplacement prévue lors du moulage pour qu'ils s'opposent à toute extension de la couche de recouvrement pendant le moulage.

Il est préférable de placer le tissu de coton du côté du moule et non du côté de l'ébauche de la bande de roulement pour faciliter la découpe du tissu et le glissement de la couche de recouvrement jusqu'à sa position dans la découpure.

L'ensemble a alors été placé dans un moule, et les opérations de moulage telles que décrites aux figures 2a à 2d se sont alors déroulées sans difficulté, le tissu de coton a permis une mise en place précise de la couche de recouvrement dans les découpures de la bande de roulement. En particulier, le tissu de coton, très fin, a pu être coupé sans difficulté par les lames 7 et le cordon 5 a entraîné comme prévu la couche de recouvrement dans la découpure 3, 4 de la bande de roulement.

Le matériau élastomère ME1, très chargé en soufre, a un comportement à cru ou avec une pré-vulcanisation limitée obtenue lors de l'imprégnation à chaud et sous pression usuelle.

Le taux de soufre supérieur à 20 pce permet d'obtenir un matériau de la couche de recouvrement de très haut module (module d'extension à une déformation de 3% de l'ordre de 300 à 1000 MPa) ce qui est très favorable à l'adhérence sur sol enneigé.

Le deuxième essai A2 a été lui aussi réalisé avec un tissu de coton comme assemblage de fibres, mais avec un mélange de haute Tg ME2.

Les conditions d'imprégnation ont été identiques à celles du premier essai, le tissu de coton a été placé du côté du moule et le matériau ME2 a été prévulcanisé lors de l'imprégnation.

Le moulage s'est bien passé comme précédemment.

Les trois autres essais ont été réalisés avec une feutrine ou feutre de viscose comme assemblage de fibres et une ou deux couches de mélange diénique ME2 comme matériau élastomère d'imprégnation.

Pour l'essai A3, le feutre de viscose a été placé en sandwich entre deux couches de mélanges ME2 dans des conditions identiques de température et de pression et pendant 11 minutes. Cela a permis une bonne imprégnation du feutre par le mélange. L'épaisseur finale de la couche de recouvrement a été de 1,1 mm.

Les opérations de moulage se sont bien déroulées. Cela indique que la rigidité intrinsèque du feutre de viscose a été suffisante pour assurer un glissement aisé de la couche de recouvrement et sa non extension lors de ce glissement puisque cette couche s'est retrouvée exactement dans l'ensemble de la découpure comme indiqué.

L'essai A4 a été très proche, avec comme seule modification une durée d'imprégnation plus longue de 20 minutes au lieu de 11. Cela a augmenté sensiblement la prévulcanisation du mélange élastomère et on a noté une plus grande facilité de glissement de la couche de recouvrement sur l'ébauche crue de la bande de roulement.

Pour l'essai A5, seule une couche de mélange diénique ME2 a été utilisée pour imprégner le feutre de viscose. La durée de l'opération d'imprégnation a été de 9 minutes. L'épaisseur finale de la couche de recouvrement a été de l'ordre de 0,6 mm.

Cet essai de moulage s'est aussi bien déroulé.

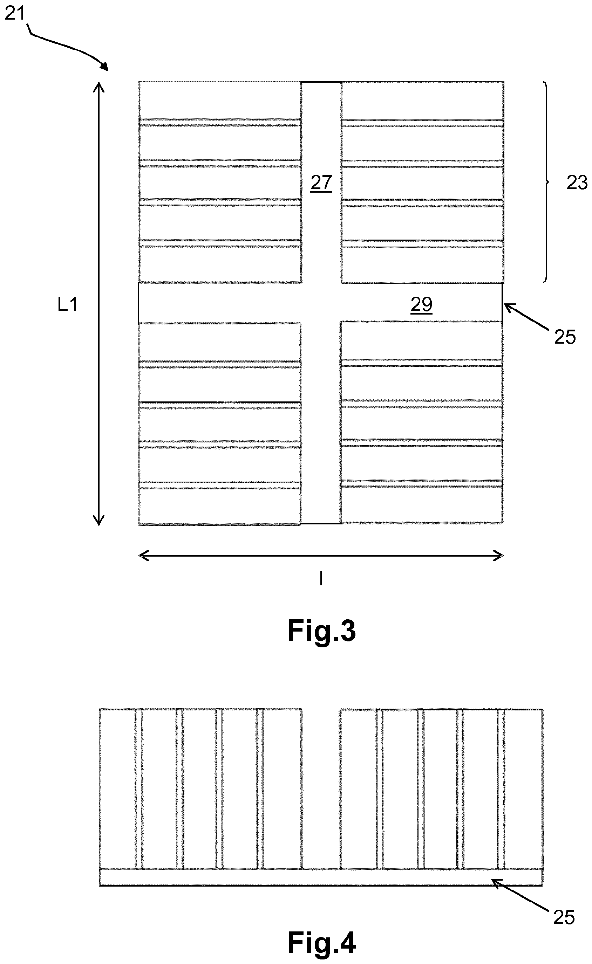

Des couches de recouvrement similaires à celles des essais A3, A4 et A5 ont aussi été utilisées pour réaliser des éprouvettes 21 visibles aux **figures 3 et 4**.

L'éprouvette 21 utilisée est présentée en vue de dessus sur la **figure 3** et en vue de côté sur la **figure 4**. Cette éprouvette est constituée de quatre blocs 23 de mélange caoutchouteux moulés sur un support caoutchouteux 25 parallélépipédique (de longueur L1=60 mm, de largeur 1=56 mm et d'épaisseur 2 mm).

Chaque bloc a une largeur égale à 25 mm, une longueur égale à 27 mm et une hauteur de 9 mm. Ces blocs sont séparés par une rainure longitudinale 27 et une rainure transversale 29, toutes deux de l'ordre de 6 mm de large. Chaque bloc 23 comporte quatre incisions 31 d'orientation axiale. Ces incisions ont une largeur de 0,6 mm et elles séparent le bloc en 5 parties égales. Ces incisions débouchent de part et d'autre du bloc. Le déplacement de l'éprouvette est effectué dans la direction longitudinale, normale à l'orientation axiale des incisions.

Les tests ont été réalisés sur une piste de longueur 110 mm, recouverte d'une neige artificielle compacte, à une température de -10°C.

La charge et la force tangentielle sont enregistrées durant le déplacement horizontal du tronçon de bande de roulement. On calcule alors le coefficient de frottement qui est obtenu en divisant la valeur moyenne de la force tangentielle par la charge appliquée sur les 30 premiers millimètres du déplacement.

Trois épaisseurs de couches de recouvrement ont été obtenues : de 1,1 mm, 0,8 mm et 0,5 MM. Le moulage de ces éprouvettes a été tel que toutes les découpures, rainures et incisions, de l'éprouvette ont été recouvertes d'une couche de matériau de recouvrement.

Une éprouvette témoin a été réalisée en utilisant comme mélange de base une composition de bande de roulement de type « neige ».

Des essais de frottement sur sol enneigé ont été effectués avec ces éprouvettes et les résultats sont donnés dans le tableau 3 en valeur relative. Une valeur de 100 est affectée au résultat pour l'éprouvette témoin, une valeur supérieur à 100 indique un coefficient de frottement supérieur donc une performance d'adhérence plus élevée. Une valeur inférieure à 100 indique un coefficient de frottement pour l'essai inférieur au témoin.

**Tableau 3**

| Echantillon de bloc de sculpture | Témoin | A3 | A4 | A5 |
|---|---|---|---|---|
| Epaisseur de la couche de recouvrement (mm) | -- | 1,1 | 0,8 | 0,5 |
| Coefficient de frottement | 100 | 110 | 106 | 104 |

Le mélange ME2 est un mélange à base d'un SBR de très haute tempétature de transition vitreuse Tg = -12°C. La composition présente un module dynamique de cisaillement G* de l'ordre de 275 MPa à une température de -10°C ce qui procure aux arêtes des éprouvettes une très haute rigidité à cette température très basse. Cette composition a aussi un module dynamique de cisaillement beaucoup plus bas à une température de 60°C, inférieure à 0,4 MPa.

L'invention n'est pas limitée aux exemples décrits et représentés et diverses modifications peuvent y être apportées sans sortir de son cadre.

**Revendications**

1. Méthode de fabrication d'une bande de roulement d'un pneumatique, cette bande de roulement comprenant une pluralité d'éléments en relief (20), chaque élément en relief comportant une face de contact destinée à entrer en contact avec un sol au cours d'un roulage du pneumatique et des faces latérales reliées à cette face de contact, la méthode de fabrication comportant les étapes suivantes :

   - une étape de préparation d'une ébauche crue (11) du pneumatique ;
   - une étape de mise en place d'une couche de recouvrement (9) sur tout ou partie d'une surface externe de l'ébauche crue ;
   - une étape de mise en place de l'ébauche crue (11) dans un moule ;
   - le moule comportant une lame (5), une étape de moulage par cette lame d'une face latérale d'un élément en relief (20) ;
- une étape de vulcanisation de l'ébauche crue pour l'obtention du pneumatique ;

**caractérisée en ce que** cette méthode de fabrication comprend, en outre, les étapes suivantes :

- une étape de découpe de la couche de recouvrement (9) par des moyens de découpe appartenant au moule ;
- au cours du moulage de la face latérale de l'élément en relief par la lame, une étape d'entraînement par cette lame d'une partie (13) découpée de la couche de recouvrement dans l'ébauche crue de sorte à ce que la face latérale de l'élément en relief soit recouverte partiellement ou en totalité par cette partie découpée.

2. Méthode de fabrication selon la revendication 1, **caractérisée en ce que** la découpe de la couche de recouvrement par les moyens de découpe du moule est réalisée avant le moulage de la face latérale.

3. Méthode de fabrication selon la revendication 1, **caractérisée en ce que** la découpe de la couche de recouvrement par les moyens de découpe du moule est réalisée au cours du moulage de la face latérale.

4. Méthode de fabrication selon l'une quelconque des revendications 1 à 3, **caractérisée en ce qu'**on règle la position des moyens de découpe par rapport à la lame, préalablement à l'étape de découpe de la couche de recouvrement.

5. Méthode de fabrication selon l'une quelconque des revendications 1 à 4, **caractérisée en ce que** les moyens de découpe sont amovibles et on monte dans le moule des moyens de découpe adaptés aux caractéristiques de la couche de recouvrement.

6. Méthode de fabrication selon l'une quelconque des revendications 1 à 5 dans laquelle la couche de recouvrement est formée à partir d'une ou plusieurs bandes enroulée sur la surface externe de l'ébauche crue dans la largeur de cette ébauche crue.

7. Méthode de fabrication selon l'une quelconque des revendications 1 à 6 dans laquelle la couche de recouvrement comprend un matériau élastomère et un assemblage de fibres tissées ou intissées, **caractérisée en ce que** ces fibres sont imprégnées avec ce matériau élastomère.

8. Méthode de fabrication selon la revendication 7, **caractérisée en ce que** le matériau élastomère est prévulcanisé pendant l'étape d'imprégnation des fibres avec l'élastomère.

**Patentansprüche**

1. Verfahren zur Herstellung einer Reifenlauffläche, wobei diese Lauffläche eine Vielzahl von reliefartigen Elementen (20) aufweist, wobei jedes reliefartige Element eine Kontaktfläche, welche dafür vorgesehen ist, bei einem Abrollen des Reifens mit einem Boden in Kontakt zu gelangen, und mit dieser Kontaktfläche verbundene Seitenflächen aufweist, wobei das Herstellungsverfahren die folgenden Schritte aufweist:

- einen Schritt der Vorbereitung eines Rohlings (11) des Reifens;
- einen Schritt des Anordnens einer Deckfläche (9) über die ganze oder einen Teil der äußeren Oberfläche des Rohlings;
- einen Schritt des Anordnens des Rohlings (11) in einer Form;
- wobei die Form eine Zunge (5) aufweist, einen Schritt des Abformens einer Seitenfläche eines reliefartigen Elements (20) durch diese Zunge;
- einen Schritt des Vulkanisierens des Rohlings, um den Reifen zu erzielen; **dadurch gekennzeichnet, dass** dieses Herstellungsverfahren außerdem die folgenden Schritte aufweist:

- einen Schritt des Einschneidens der Deckschicht (9) durch der Form angehörenden Schneidemittel;
- im Verlauf des Abformens der Seitenfläche des reliefartigen Elements durch die Zunge einen Schritt des Mitnehmens eines abgeschnittenen Abschnitts (13) der Deckschicht in den Rohling, so dass die Seitenfläche der reliefartigen Elements teilweise oder komplett durch diesen abgeschnittenen Abschnitt abgedeckt wird.

2. Herstellungsverfahren nach Anspruch 1, **dadurch gekennzeichnet, dass** das Einschneiden der Deckschicht durch die Schneidemittel der Form vor dem Abformen der Seitenfläche erfolgt.

**3.** Herstellungsverfahren nach Anspruch 1, **dadurch gekennzeichnet, dass** das Einschneiden der Deckschicht durch die Schneidemittel der Form während des Abformen der Seitenfläche erfolgt.

**4.** Herstellungsverfahren nach einem der Ansprüche 1 bis 3, **dadurch gekennzeichnet, dass** die Position der Schneidemittel in Bezug auf die Zunge vor dem Schritt des Einschneidens der Deckschicht eingestellt wird.

**5.** Herstellungsverfahren nach einem der Ansprüche 1 bis 4, **dadurch gekennzeichnet, dass** die Schneidemittel abnehmbar sind und in der Form Schneidemittel montiert werden, welche an die Eigenschaften der Deckschicht angepasst sind.

**6.** Herstellungsverfahren nach einem der Ansprüche 1 bis 5, bei welchem die Deckschicht ausgehend von einem oder mehreren auf der äußeren Oberfläche des Rohlings aufgewickelten Bänder in der Breite dieses Rohlings gebildet wird.

**7.** Herstellungsverfahren nach einem der Ansprüche 1 bis 6, bei welchem die Deckschicht ein elastomeres Material und einen Verbund von gewirkten oder Vlies-Fasern aufweist, **dadurch gekennzeichnet, dass** diese Fasern mit einem elastomeren Material getränkt sind.

**8.** Herstellungsverfahren nach Anspruch 7, **dadurch gekennzeichnet, dass** das elastomere Material während des Schrittes des Tränkens der Fasern mit dem Elastomer vorvulkanisiert wird.

**Claims**

**1.** Method of manufacturing a tyre tread, this tread comprising a plurality of raised elements (20), each raised element comprising a contact face intended to come into contact with a ground when the tyre is rolling along and lateral faces connected to this contact face, the method of manufacture comprising the following steps:

- a step of preparing a green form (11) of the tyre;
- a step of laying a cover layer (9) over all or part of an external surface of the green tyre;
- a step of laying the green tyre (11) in a mould;
- with the mould comprising a blade (5), a step of using this blade to mould a lateral face of a raised element (20);
- a step of vulcanizing the green tyre in order to obtain the tyre;

**characterized in that** this method of manufacture further comprises the following steps:

- a step of cutting the cover layer (9) using cutting means belonging to the mould;
- during the moulding of the lateral face of the raised element by the blade, a step whereby this blade drives a cut part (13) of the cover layer into the green tyre so that the lateral face of the raised element is partially or fully covered by this cut part.

**2.** Method of manufacture according to Claim 1, **characterized in that** the cutting of the cover layer by the cutting means belonging to the mould is performed before the moulding of the lateral face.

**3.** Method of manufacture according to Claim 1, **characterized in that** the cutting of the cover layer by the cutting means belonging to the mould is performed during the course of the moulding of the lateral face.

**4.** Method of manufacture according to any one of Claims 1 to 3, **characterized in that** the position of the cutting means with respect to the blade is adjusted prior to the step of cutting the cover layer.

**5.** Method of manufacture according to any one of Claims 1 to 4, **characterized in that** the cutting means are removable and cutting means suited to the characteristics of the cover layer are fitted in the mould.

**6.** Method of manufacture according to any one of Claims 1 to 5, in which the cover layer is formed from one or more strips wound onto the external surface of the green tyre across the width of this green tyre.

**7.** Method of manufacture according to any one of Claims 1 to 6, in which the cover layer comprises an elastomeric material and a collection of woven or nonwoven fibres, **characterized in that** these fibres are impregnated with this elastomeric material.

8. Method of manufacture according to Claim 7, **characterized in that** the elastomeric material is prevulcanized during the step of impregnating the fibres with the elastomer.

**Fig.1**

**Fig.2a**

**Fig.2b**

**Fig.2c**

**Fig.2d**

Fig.3

Fig.4

**EP 2 790 906 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 320215 A
- GB 1124915 A
- US 5614041 A
- EP 510550 A
- WO 03089257 A
- WO 2006069912 A